# EUROPÄISCHE PATENTSCHRIFT

(11) **EP 3 287 256 B1**
(45) Veröffentlichungstag und Bekanntmachung des Hinweises auf die Patenterteilung: **22.07.2020**
(21) Anmeldenummer: 17195604.8
(22) Anmeldetag: 31.07.2014
(51) Int. Cl.: B29C 49/42, B29C 49/64, B29C 49/68

(54) **BEHÄLTERBEHANDLUNGSANLAGE MIT EINEM OFEN UND EINER BLASFORMVORRICHTUNG MIT INDIVIDUAL-ANTRIEB VON TRÄGERN FÜR PREFORMS**
CONTAINER TREATMENT SYSTEM WITH AN OVEN AND A BLOW MOULDING DEVICE WITH INDIVIDUAL DRIVE OF CARRIERS FOR PREFORMS
INSTALLATION DE TRAITEMENT DE RÉCIPIENT DOTÉE D'UN FOUR ET D'UN DISPOSITIF DE FORMAGE PAR SOUFFLAGE AYANT UN ENTRAÎNEMENT INDIVIDUEL DES SUPPORTS DES PRÉFORMES

(30) Priorität: 13.09.2013 DE 102013218399
(43) Veröffentlichungstag der Anmeldung: 28.02.2018
(62) Teilanmeldung aus: 14179251.5
(73) Patentinhaber: Krones AG, 93073 Neutraubling (DE)
(72) Erfinder: Lindner, Peter, 93070 Neutraubling (DE); Albrecht, Thomas, 93070 Neutraubling (DE); Hahn, Wolfgang, 93070 Neutraubling (DE); Senn, Konrad, 93070 Neutraubling (DE); Zölfl, Markus, 93070 Neutraubling (DE); Raith, Stefan, 93070 Neutraubling (DE); Neugebauer, Holger, 93070 Neutraubling (DE)
(74) Vertreter: Grünecker Patent- und Rechtsanwälte PartG mbB

(56) Entgegenhaltungen:
- EP-A1- 2 052 842
- WO-A1-01/89791
- WO-A1-2014/114411
- DE-A1-102010 018 153
- FR-A1- 2 890 059
- US-A1- 2011 236 517

## Beschreibung

Die Erfindung betrifft eine Behälterbehandlungsanlage mit einem Ofen und einer dem Ofen nachgeschalteten Blasformvorrichtung zum Bearbeiten einer Vielzahl von Behälterrohlingen, wie Preforms, mit einer Transporteinrichtung, die zum Fördern mehrerer Träger ausgebildet ist, wobei jeder Träger zur Aufnahme zumindest eines Behälterrohlings vorgesehen ist.

Unter Transporteinrichtungen werden Fördereinrichtungen verstanden, die für die Behälterrohlinge Träger aufweisen, welche in einem geschlossenen Kreislauf gefördert werden.

Aus dem Stand der Technik sind Vorrichtungen zum Blasformen von Gegenständen aus vorgefertigten Vorformlingen, die auch als Behälterrohlinge oder Preforms bezeichnet werden, bekannt, wie etwa aus der DE 10 2010 018 153 A1, die eine Behälterbehandlungsanlage nach dem Oberbegriff des Anspruchs 1 offenbart.

Auch offenbart die DE 3 910 293 C2 eine Vorrichtung zum Blasformen von Gegenständen aus vorgefertigten Vorformlingen, mit einer Transporteinrichtung, die die Vorformlinge durch eine Infrarotstrahler aufweisende Heizstation bewegt, wobei die Vorformlinge mit nach unten positioniertem Halsbereich auf jeweils einen Aufnahmedorn einer Halterung aufgesteckt sind und während des Transports um ihre vertikale Achse gedreht werden und mit einer Einrichtung zum Abnehmen der erwärmten Vorformlinge von den Halterungen an einer der Heizstationen nachgeordneten Abnahmestation und zum Überführen der Vorformlinge in wenigstens eine Blasformstation, wobei die Transporteinrichtung wenigstens eine Transportkette aufweist, die die Vorformlinge intermittierend zu der Abnahmestation bewegt, und wobei jeweils auf zwei benachbarten Kettengliedern der Transportkette eine Halterung lösbar befestigt ist, so dass der Abstand der Halterungen in Transportrichtung einstellbar ist, um bei unterschiedlichen Durchmessern der zu erwärmenden Vorformlinge deren Zwischenräume beim Transport zu minimieren.

Weiterhin offenbart die EP 2 025 842 A1 ein Verfahren und eine Vorrichtung zum Herstellen von Kunststoffbehältern, wobei die Vorformlinge durch eine Transfereinrichtung transportiert werden, die eine Einstellung beispielsweise von Transitzeiten erlaubt.

Die US 2011/2036517 A1 offenbart ein Verfahren zum Herstellen von Kunststoffbehältern, wobei die Blasformmaschine so gesteuert werden kann, dass wenigstens zwei verschiedene Kunststoffbehälter innerhalb eines Produktionszyklus von der Blasformmaschine ausgegeben werden. Des Weiteren zeigt die WO 01/89791 A1 mit flexiblen Kavitäten, die eine Vielzahl von Stationen umfassen, und einer thermalen Konditionierungseinrichtung, in der Preforms erwärmt und ther misch konditioniert werden, bevor sie der Blasformstation zugeführt werden. Eine Vielzahl von Trägern zum Empfangen der Preforms ist beschrieben, die durch die Anlage transportiert werden.

Dieser bekannte Stand der Technik hat jedoch den Nachteil, dass unterschiedlich ausgestaltete Behälter nur umständlich bearbeitet werden können, da die Träger, welche an der Transportkette gekoppelt sind, immer erst umständlich adaptiert werden müssen.

Es ist daher die Aufgabe der vorliegenden Erfindung einen besonders kostengünstigen Ofen mit einer Transporteinrichtung zur Verfügung zu stellen, der flexibel mit Preforms beschickbar ist und wenig Umrüstaufwand hervorruft.

Die Aufgabe wird mit einer Behälterbehandlungsanlage nach Anspruch 1 gelöst.

Erfindungsgemäss werden die Transporteinrichtung und der Träger so aufeinander abgestimmt sind, dass jeder Träger mittels dieser Transporteinrichtung individuell durch den Ofen fahrbar ist. Das heißt, dass jeder Träger unabhängig und/oder entkoppelt von den anderen Trägern durch den Ofen treibbar ist.

Vorteilhafte Ausführungsformen sind in den Unteransprüchen beansprucht und werden nachfolgend näher erläutert.

In einer vorteilhaften Weiterbildung ist vorgesehen, dass die Transporteinrichtung und der Träger so aufeinander abgestimmt sind, dass jeder Träger einen Preform mittels dieser Transporteinrichtung individuell durch den Ofen fahren kann. Das individuelle Hindurchführen der Träger mit Preforms durch den Ofen erlaubt eine individuelle Erwärmung jedes Preforms je nach Anforderungen.

Es ist auch von Vorteil, wenn dieselbe Transporteinrichtung durch die Blasformvorrichtung verläuft, die durch den Ofen komplett hindurch verläuft, so dass derselbe Träger mit eingesetzt bleibendem Behälterrohling durch sowohl den Ofen als auch die Blasformvorrichtung verfahrbar ist. Ein Umhängen, Umlagern und/oder Versetzen der Behälterrohlinge von einem ersten Träger im Ofen zu einem zweiten Träger in der Blasformvorrichtung kann unterbleiben. Es kann ein und derselbe Träger in beiden Bearbeitungseinrichtungen verwendet werden, sowie auf dem Weg zwischen diesen beiden. Zudem ist es insbesondere möglich, die genannte Transporteinrichtung auch an weiteren Transportwegen einzusetzen. So ist der Einsatz besagter Transportvorrichtung z.B. auch bei einer geblockten Maschine auf dem Transferweg z.B: zwischen einer Blasmaschine und einem Füller oder einer Etikettiermaschine oder dergleichen vorteilhaft.

Auch ist es von Vorteil, wenn mindestens einer der Träger einen zum Antrieb benutzten Servomotor aufweist. Aufgrund der heutigen Kostengünstigkeit von Servomotoren, wird es möglich, solche Antriebsaggregate auch singulär für jeden einzelnen Träger zu verwenden und trotzdem die Kosten gering zu halten. Der Servomotor lässt sich auch mit einfachen Mitteln so einstellen, dass jeder Träger von den anderen unabhängig durch den Ofen führbar ist und vorzugsweise jeder Träger in bestimmten Abständen der Transporteinrichtung eine unterschiedliche Geschwindigkeit aufweist. Die jeweiligen Geschwindigkeiten der einzelnen Wägelchen lassen sich dabei auch automatisch ansteuern.

Wirkungsvoll kann auch auf Förderketten mit fester Teilung verzichtet werden, wenn einer der Träger zum magnetkraftabhängigen Bewegen ausgelegt ist, vorzugsweise in Wechselwirkung mit einer Transportbahn der Transporteinrichtung, auf der der Träger gleitfähig aufliegt. Das Prinzip eines linearen Synchronmotors mit einer Vielzahl an frei steuerbaren Läufern bietet sich diesbezüglich an.

Über eine Steuereinheit kann das Verfahrprofil jedes einzelnen Träger auch beeinflusst werden, derart, dass die Relativabstände der einzelnen Preforms zueinander in jeder Position des Ofens gesteuert werden, womit es möglich ist, die Teilung des Ofens flexibel zu gestalten. Wenn der Ofen eine flexible Teilung aufweist, so wird es möglich, z. B. kleine Preforms mit engerem Abstand zueinander und große Preforms mit größerem Abstand zueinander durch den Ofen zu verfahren. Dies garantiert eine jeweils auf den speziellen Preform abgestimmte maximale Energieeffizienz.

Wenn der Träger einen Wagenabschnitt aufweist, der auf der Transportbahn aufliegt, und der Träger zumindest einen vom Wagenabschnitt abstehenden Drehhalter aufweist, der zur drehenden Aufnahme eines Behälterrohlings ausgelegt ist, so ist es möglich, einen durch einen Trägerhalter gehalterten Behälterrohling, bzw. einem Preform, in Drehung zu versetzen, so dass die Wandung des Behälterrohlings/Preforms an allen Stellen mit vom Ofen ausgestrahlter Wärme, beispielsweise über einen Infrarotstrahler, beaufschlagt wird. Ferner ist es möglich, dass sich der Behälterrohling in Abhängigkeit von seiner Translationsbewegung unterschiedlich schnell dreht, so dass unterschiedlich lang Wärmeeinstrahlung pro Behälterwandabschnitt wirkt. Eine besonders individuelle Ausgestaltung der Behälterrohlinge lässt sich dann erreichen.

Besonders zweckmäßig ist es, wenn der Drehhalter eine oder mehrere Spindeln mit je zumindest einem Dorn aufweist, auf dem der Behälterrohling aufsteckbar ist. Der Dorn kann sich vertikal nach oben oder unten erstrecken und macht ein einfaches Aufsetzen des Preforms möglich.

Der Ofen bzw. die Behälterbehandlungsanlage lässt sich auch besonders einfach umrüsten, wenn die Spindel über einen Schnellverschluss am Wagenabschnitt gekoppelt ist.

Besonders schnell und sicher lassen sich die Preforms durch den Ofen führen, wenn die Spindel einen Greifabschnitt zum Umfassen des Behälterrohlings aufweist.

Es ist auch denkbar den Preform an der Mundstückinnenseite mit einer Spannzange zu greifen. Ein zylindrisch geformter Abdeckring schützt dabei das Mundstück vor Wärme.

Damit die Drehbewegung der Behälterrohlinge eingeleitet werden kann, ist es von Vorteil, wenn die Spindel eine Außenverzahnung aufweist, etwa an einem Zahnrad, oder eine Kraftübertragungsfläche aufweist, etwa an einem Reibrad.

Weiterhin ist es besonders vorteilhaft, dass jeder Behälterrohling der Vielzahl von Behälterrohlingen ein vorgegebenes, insbesondere individuelles Heizprofil, erlangt.

Besonders vorteilhaft ist es, wenn die Transporteinrichtung einen zur Außenverzahnung oder zur Kraftübertragungsfläche komplementären Kontaktbereich an der Transporteinrichtung aufweist, mit der die Außenverzahnung oder Kraftübertragungsfläche zusammenwirkt, um den Behälterrohling in Rotation um dessen Längsachse zu versetzen. Beim Ineinandergreifen der Außenverzahnung der Spindel in eine Außen- oder Innenverzahnung der Transporteinrichtung, wird ein energieverlustfreies Antreiben der Behälterrohlinge erwirkt. Besonders einfach lässt sich eine Kraftübertragung realisieren, wenn die Kraftübertragungsfläche der Spindel in Reibkontakt mit einem komplementären Kontaktbereich der Transporteinrichtung befindlich ist. Auf diese Weise kann, gesteuert über die Verfahrgeschwindigkeit, über den Umfang des Behälterrohlings ein unterschiedliches Temperaturprofil aufgebracht werden. Indem zum Beispiel eine Strecke besonders langsam durchfahren wird, verweilt der entsprechende abgerollte Bereich des Flaschenumfangs länger vor der Wärmequelle und kann dadurch mehr Wärme aufnehmen. Später kann die, durch die Langsamfahrt, entstandene Lücke wieder aufgeholt werden.

Es ist auch besonders zweckmäßig, wenn die Transporteinrichtung eine Weiche aufweist, um eine erste Anzahl von Trägern von einer zweiten Anzahl an Trägern zu trennen. Dies ist besonders vorteilhaft, um zum Beispiel die Träger (Pucks) oder die Flaschengreifeinrichtung während des laufenden Betriebs durch eine Reinigungs- oder Sterilisationseinrichtung zu fahren. Oder nur jeder n-ten Flasche ein bestimmtes Temperaturprofil aufzuprägen.

Auch ist es von Vorteil, wenn ein Abstellgleis für eine bestimmte Anzahl von Trägern vorhanden ist.

Von Vorteil ist es auch, statt eines konventionellen Verschlusses mit Außengewinde einen innen liegenden Verschluss am Preform bzw. an der Flasche zu verwenden, wobei dieser eingepresst, eingerastet, eingeschweißt oder ähnlich innen liegend befestigt werden kann. Ein solcher Verschluss würde es auch ermöglichen, dass ein durchgängiger Transport von Preforms vor der Blasformvorrichtung und der Flaschen nach der Blasformvorrichtung durch alle Behandlungsstationen bis zum Einpacker erleichtert. Die sonst auftretenden hohen Torsionskräfte können vermieden werden. Das sogenannte "Neck-Handling" ist dann trotzdem durchführbar. Auch wird eine stabile Arretierung über die Mündung des Preforms bzw. der Flasche am Läufer möglich. Ein auf linearen Motoren basierender Transport des Preforms bzw. der Flasche bis zum Einpacker über alle Behandlungseinheiten ist dann realisierbar. Dies ermöglicht auch weitere Gewichtsreduzierungen am Preform, da zum Beispiel der Tragring entfallen kann.

Ein durchgängiger Transport über den Verschließer hinaus bis zum Einpacker, als Ersatz für herkömmliche Preform- und Behältertransportarten, d.h. bis in eine Verpackung hinein, ist realisierbar. Da die Flasche nicht stehend transportiert werden muss, ermöglicht dies ferner eine Vielfalt von Flaschenböden und -geometrien. Die Flaschen werden direkt in die Verpackung "gestellt". Dazu können innenliegende Verschlüsse vorgesehen werden, die eingepresst oder eingeschraubt werden. Ein Innengewinde ist dabei von Vorteil. Es können jedoch auch Preforms ohne Außengewinde für die herkömmlichen Verschlüsse verwendet werden. Eine Fixierung in den einzelnen Läufern des Motors, die auch Schlitten oder Träger genannt werden, über Rastelemente, Bajonett-Verschlussarten oder ähnliche Befestigungsarten ist möglich. Auch ist es möglich, dass die Befestigung am Träger dezentral bzw. seitlich vorgesehen ist, um die Führung der Transporteinheit an den Behandlungsstationen seitlich vorbei zu ermöglichen.

Die Verwendung eines zusätzlichen Antriebes für ein Greifelement auf dem Träger ist insbesondere für die Veränderung des Abstandes zwischen dem Preform bzw. der Flasche zu dem Träger oder für Greifsysteme angedacht.

Auch kann ein zusätzlicher Antrieb für die Arretierung des Preforms vorgesehen werden.

Wie bereits angesprochen, kann ein Weichensystem zur Aufteilung/Zusammenführung der einzelnen Träger zu und/oder von den Behandlungsstationen ermöglicht sein.

Zur Reduktion des Platzbedarfs ist auch eine übereinanderliegende Anordnung der Behandlungseinheiten denkbar.

Eine Ausleitung nach einer Inspektion ist durch die erfindungsgemäße Ausgestaltung ebenfalls möglich, genauso wie eine sporadische Ausleitung für qualitätssichernde Maßnahmen, wie etwa eine Aufdrehwertkontrolle, eine Fixwertkontrolle oder ein Transport in ein Labor. Die Flaschen können auch während des Transports bedruckt werden, beispielsweise etikettiert werden oder mit Farbe besprüht oder mit einem Laser markiert werden.

Beim Etikettieren bzw. Bedrucken im Vorbeifahren am Etikettier-/Druckaggregat kann auch ein kurzzeitiger Stopp erfolgen, was aufgrund der Magnetantriebsart leicht steuerbar ist. Ferner ist es möglich zur Leistungserhöhung mehrere Aggregate seriell und/oder parallel zu verwenden.

Eine Wartung, Reinigung und/oder Sterilisierung der einzelnen Träger und Läufer des linearen Synchronmotors führt zu einer wartungsfreieren Betriebsform und einer besseren Hygiene.

Eine Integration von RFID-Chips in die Wägelchen erleichtert auch die Verfolgbarkeit jeder einzelnen Flasche bzw. jedes einzelnen Preforms.

Eine schräg stehende, waagrechte oder senkrechte Transportierung der Preforms oder Flaschen ist ferner von Vorteil, insbesondere bei Verwendung einer zweiteiligen Preformhalterung oder Halterungen, die mehrere Preforms aufnehmen können.

Es ist auch möglich, dass ein einzelner Träger als Transportelement für Rüstteile, welche während eines Rüstprozesses verwendet werden, wie Formen, Reckanschläge, Füllventile oder Ähnliches an einen Rüstort verbracht werden.

An Stellen, die hohe Präzision und/oder hohe Beschleunigung erfordern, kann eine mechanische Führung integriert sein, die den Wagen genau positioniert, etwa eine elektromechanische Kombination. Das ist auch einfach zu realisieren, da die zu beschleunigenden/abzubremsenden Kräfte durch das geringere Gewicht der Einheit beherrschbar sind. Natürlich kann auch das einzelne Wägelchen komplett mechanisch angeschoben bzw. geführt werden, bevorzugt dort, wo hohe Kräfte auftreten. Dazu kann die eine Beförderungseinheit, wie z.B. eine seitlich oder oben angebrachte Zahnstange als Eingreifeinheit ausgestattet werden und zwangsgeführt sein. Ein eventuell vorhandener Tragring dient dann nur als Endanschlag für die Preforms oder Flaschen. Im Ofen werden die Preforms in Reihe durchgeführt, wobei eine haltende Klammer so ausgebildet sein kann, dass ein externer Antrieb eine Preformrotation ermöglicht.

Flaschen können während des Transports mit dem beschriebenen Transportelements auch an einer Inspektoreinheit oder/und einem Stickstoffdroppier vorbeigeführt werden.. Ferner können die Flaschen über ein Verteilsystem in Gassen aufgeteilt werden, bevor sie an ein Unterflurband übergeben werden.

Es ist ferner von Vorteil, wenn jeder Behälterrohling der Vielzahl von Behälterrohlingen ein vorgegebenes, insbesondere individuelles Heizprofil, erlangt.

Die Erfindung wird auch mit Hilfe einer Zeichnung näher erläutert, die mehrere Ausführungsbeispiele wiedergibt. Es zeigen:
- Fig. 1: eine Behälterbehandlungsanlage mit einem Ofen und einer Blasformvorrichtung, die auch als Blasmaschine bezeichnet werden kann, in einer schematischen Ansicht von oben, gemäß einer ersten Ausführungsform,
- Fig. 2: eine Detaildarstellung eines Ausschnitts der Transporteinrichtung innerhalb des Ofens aus Fig. 1 mit über Träger bewegbaren Behälterrohlingen,
- Fig. 3: eine zu der in Fig. 2 dargestellte alternative Ausführungsform,
- Fig. 4: eine Aufteilung eines Transportstromes durch die Behälterbehandlungsanlage der Fig. 1,
- Fig. 5: eine Steuerart der durch den Ofen aus Fig. 1 geleiteten Behälterrohlinge,
- Fig. 6: eine Preform mit zylindrischem Abdeckring in teils perspektivischer und teils geschnittener Ansicht, und
- Fig. 7: eine erweiterte erfindungsgemäße Behälterbehandlungsanlage in einer schematischen Darstellungsart zur Verdeutlichung des Flusses der Behälterrohlinge bzw. der Flaschen.

Die Figuren sind lediglich schematischer Natur und dienen dem Verständnis der Erfindung. Die gleichen Elemente sind mit selben Bezugszeichen versehen.

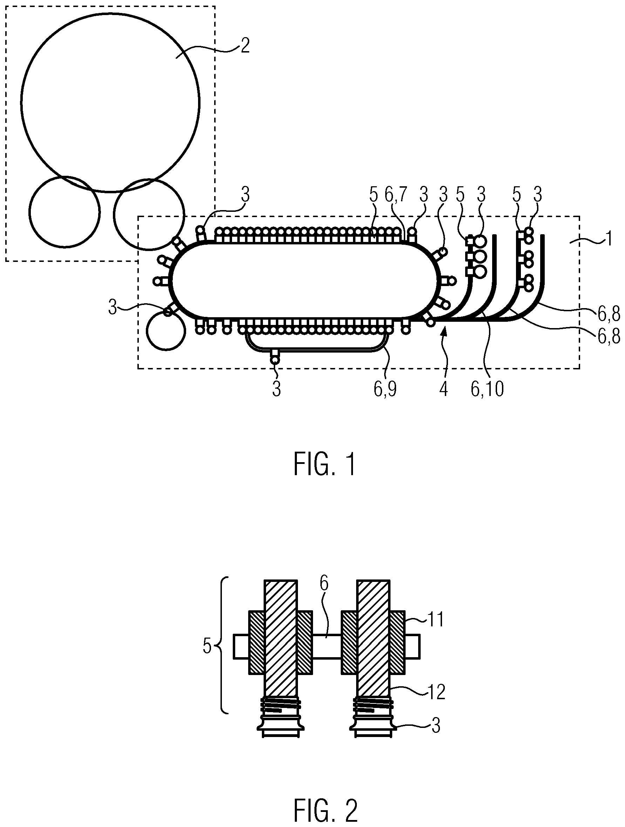

In Fig. 1 ist ein Ofen 1 dargestellt, der an einer Blasformvorrichtung 2 angekoppelt ist. Die Blasformvorrichtung 2 wird auch als Blasmaschine bezeichnet. Der Ofen und die Blasformvorrichtung 2 wird Teil einer erfindungsgemäßen Behälterbehandlungsanlage.

Durch den Ofen 1 werden Behälterrohlinge 3, die auch als Preforms bezeichnet werden, mittels einer Transporteinrichtung 4 und darauf gleitenden Trägern 5 geleitet. Die Transporteinrichtung 4 weist Transportbahnen 6 auf. Die Transportbahn 6 weist unterschiedliche Abschnitte auf, so z. B. einen Rundführabschnitt 7, mehrere Einleitstrecken 8 und eine Ausweichstrecke 9. Ferner ist eine Abstellstrecke 10 vorhanden, die auch als Abstellgleis ausgebildet sein kann. Der Rundführabschnitt 7 kann auch als Ofenbahn bezeichnet werden.

Die Transporteinrichtung 4 mit ihrer Transportbahn 6 kann sich auch nicht nur durch den Ofen ziehen, sondern auch durch die Blasformvorrichtung 2. Die auf der Transportbahn 6 individuell bewegbaren Träger 5, welche die Behälterrohlinge 3 aufnehmen können, sind dann individuell auf derselben Transporteinrichtung 4 und somit auf derselben Transportbahn 6 durch sowohl den Ofen 1, als auch die Blasformvorrichtung 2 führbar. Diese Ausführungsform ist allerdings nicht explizit in den Figuren dargestellt.

Wie besonders gut in Fig. 2 zu erkennen, werden die Träger 5 auf der Transportbahn 6 gleitend gelagert, in Bewegung gesetzt und durch den Ofen 1 geschickt. Dabei geraten sie in den Wirkbereich einer oder mehrerer Infrarotstrahler innerhalb einer Heizstrecke.

Die Träger 5 weisen einen Wagenabschnitt 11 auf, an dem eine Spindel 12 befestigt ist. Auf die Spindel 12, die in dem in Fig. 2 dargestellten Ausführungsbeispiel horizontal ausgerichtet ist, ist ein Behälterrohling 3 aufgesteckt. Die Träger 5 werden als magnetkraftabhängig bewegte Teile ausgebildet, oder enthalten einen Servomotor.

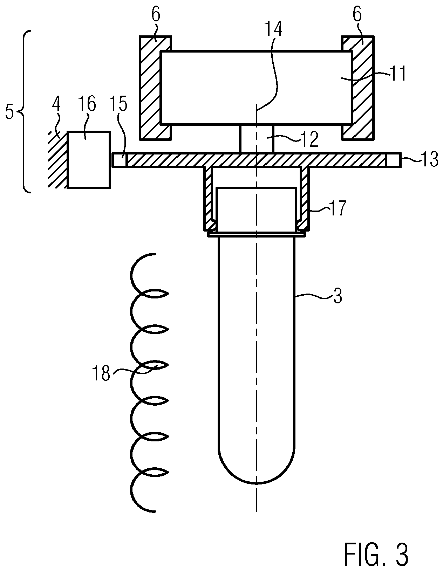

In Fig. 3 ist eine Variante eines Träger 5 dargestellt, wobei der Träger 5 einen als Läufer oder Träger ausgebildeten Wagenabschnitt 11 aufweist, der zweiseitig in einer Transportbahn 6 gleitfähig gelagert ist, wobei der Wagenabschnitt 11 mit einer Spindel 12 verbunden ist, an der ein Zahn- oder Reibrad 13 befestigt ist. Das Zahn- oder Reibrad 13 ist relativ zum Wagenabschnitt 11 um eine gemeinsame Längsachse 14 drehbar am Wagenabschnitt 11 angebunden.

In Fig. 3 weist das Zahn- oder Reibrad 13 eine Außenverzahnung 15 auf, die mit einem komplementären Kontaktbereich 16 an der Transporteinrichtung 4 kraft- und/oder formschlüssig verbunden ist. Bewegt sich der Wagenabschnitt 11 aus der Bildebene heraus, so wälzt die Außenverzahnung 15 an dem Kontaktbereich 16 ab und setzt das Zahn- oder Reibrad 13 in Drehbewegung. An dem Zahn- oder Reibrad 13 ist auch ein Greifabschnitt 17 vorhanden, der ein Ende des Behälterrohlings 3 von außen umgreift. Der Behälterrohling 3 ist benachbart zu einer Heizvorrichtung 18 des Ofen 1 angeordnet, wobei die Heizvorrichtung 18 als einer oder mehrere Infrarotstrahler ausgebildet sein kann.

Es ist in einer Ausführungsform der Erfindung bevorzugt, wenn jeder Träger über eine eigenständige Stromversorgung verfügt. So kann in jedem Träger ein Akku oder ein Kondensator vorgesehen sein, der zumindest einen Teil des Trägers mit Strom versorgt. Der Akku kann beispielsweise während routinemäßiger Wartungen oder Stillstandszeiten des Trägers neu geladen werden. Hier bieten sich berührungslose Verfahren, beispielsweise mittels Induktion an. Besonders bevorzugt ist es, wenn sich ein Induktionsfeld über einen Bereich der Behälterbehandlungsanlage erstreckt. Passieren die Träger diesen Bereich in gewissen Zeitabständen periodisch, kann dies genügen, um den Akku zu laden. Alternativ kann auch vorgesehen sein, dass der gesamte Bereich der Behälterbehandlungsanlage von einem entsprechenden Induktionsfeld geflutet wird, sodass die Träger permanent berührungslos mit Energie versorgt werden.

Verfügt der Träger über eine entsprechende eigenständige Stromversorgung, können auch unabhängig arbeitende und in jedem Träger separat vorgesehene Motoren genutzt werden, um beispielsweise den vom Träger transportierten Behälter zu drehen oder zu schwenken. Dazu können vorzugsweise Piezomotoren verwendet werden, da sie zum einen sparsam und schnell und zum anderen gut ansteuerbar sind.

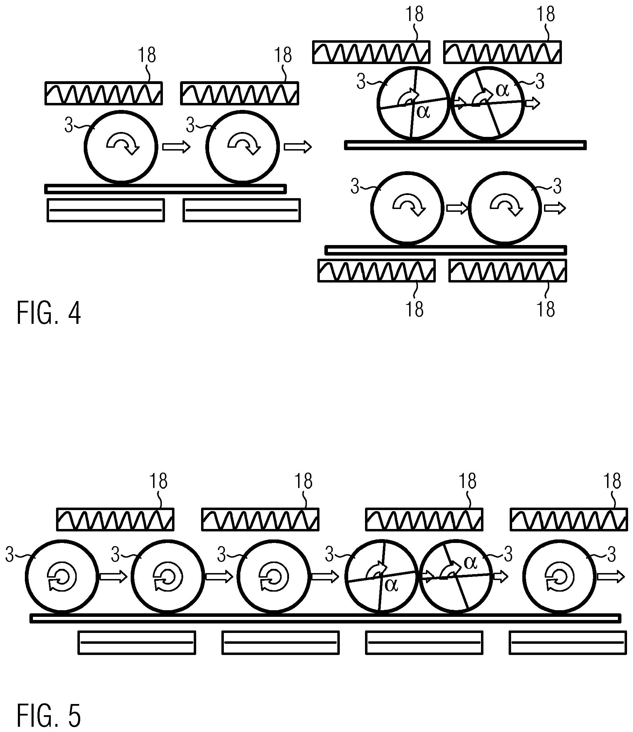

In Fig. 4 ist eine Steuerung der einzelnen Träger 5 derart zu erkennen, dass eine Blasvorrichtung 2 mit unterschiedlichen Formen bestückbar ist. Jeder Behälterrohling 3 kann auf dem Weg durch den Ofen 1 ein eigenes Temperaturprofil aufgeprägt bekommen. Langsame Drehungen über "α-schnelle" Drehungen werden über den Restwinkel erreicht, d.h., der Behälterrohling 3 dreht über den Winkel α langsam, hat also eine langsame Verfahrgeschwindigkeit, und nimmt im Umfangsbereich des Winkels α mehr Wärme auf. Den Rest der Umdrehung dreht er schnell, hat also eine schnelle Verfahrgeschwindigkeit. Hier sind keine Weichen notwendig. Ein sogenannte "Preferential Heating" ist dadurch erreichbar. Jeder Behälterrohling 3 kann individuell beheizt werden.

In Fig. 5 ist die Steuerung eines Behälterrohlingsstroms dargestellt, wobei der Strom nicht aufgeteilt wird. Je nach Translationsgeschwindigkeit der Behälterrohlinge 3 wird die Drehgeschwindigkeit gesteuert. Bei normaler Geschwindigkeit wird der Behälterrohling 3 mit normaler Rotationsgeschwindigkeit gedreht, wobei bei einer langsamen Translationsgeschwindigkeit, etwa bei einem Stau, der Behälterrohling 3 in veränderter Geschwindigkeit, langsamer oder schneller, gedreht wird. Besonders ein schnelles Drehen ist dann von Vorteil. Auch ein abschnittsweises schnelles und dann langsameres Drehen ist möglich.

Danach folgt wieder eine normale Translationsgeschwindigkeit, bei dann wieder normaler Rotationsgeschwindigkeit. Das Temperaturprofil am Umfang des Behälterrohlings 3 wird durch den Wechsel aus schneller und langsamer Vorbeifahrt am Strahler erzeugt.

Die Drehbewegung wird durch Abrollen eines Kettenrades auf einer Kette bewirkt. Alternativ ist es auch möglich, dass die Drehbewegung durch Abrollen eines Riemenrades auf einen Riemen bewirkt wird. Bewegt sich der Behälterrohling 3 langsam, wird der Rohling 3 um den Winkel α abgerollt, bis er anschließend wieder in schnelle Phasen übergeht und der Restwinkel abgerollt wird. Dann bewegt sich der Behälterrohling 3 wieder langsamer weiter.

Am Ende der Heizstrecke wird der Behälterrohling 3 auf Teilung der Blasformvorrichtung 2 gebracht. Eine langsame Transmissionsgeschwindigkeit ist mit einer langsamen Drehung verbunden, wohingegen eine schnelle Fahrt mit einer schnellen Drehung verbunden ist, wenn beispielsweise für die Blasformvorrichtung 2 ein konventionelles Transportsystem statt derselben Transporteinrichtung 4 verwendet wird. Es können Pufferstrecken für Langsamfahrt vorgehalten werden, insbesondere wenn der Winkel α sehr groß ist.

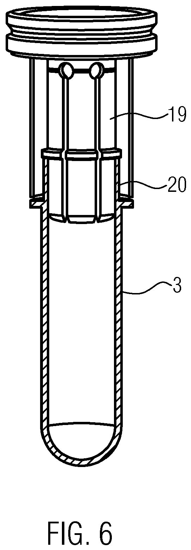

In Fig. 6 ist das Zusammenwirken des Preforms 3 mit einem Abdeckring 19, der ein Mundstück 20 des Preforms 3 schützt, dargestellt.

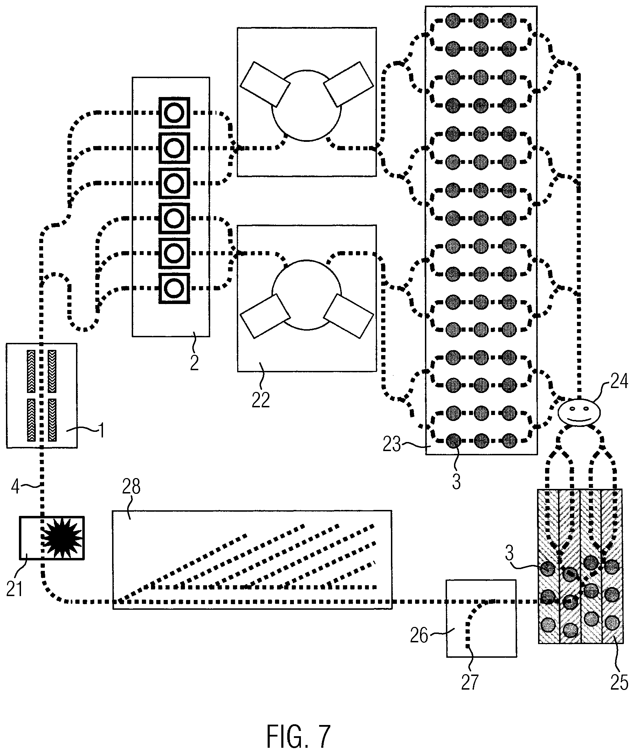

In Fig. 7 ist eine erfindungsgemäße Behälterbehandlungsanlage dargestellt, wobei ein- und dieselbe Transporteinrichtung 4 einzelne Träger 5 durch unterschiedliche Behandlungsaggregate, wie den Ofen 1 und die Blasformvorrichtung 2 leitet. Zusätzlich werden jedoch auch noch eine Aufsteckeinheit 21, eine Etikettiermaschine 22, ein Füller 23, eine Inspektionsvorrichtung 24, ein Gassenaufteiler 25, ein Tester 26 mit einer Ausleitung 27 und ein Puffer 28 durchlaufen.

Die Inspektionsvorrichtung 24 kann auch durch eine Person ersetzt werden.

Mit einer nicht dargestellten Variante können einzelne Behandlungsstationen auch umfahren werden, indem entsprechende Weichen vorgehalten sind.

Mit der in Fig. 7 dargestellten Ausführungsform ist es möglich, die Behälter und/oder Preforms auf individuelle Weise durch die gesamte Behälterbehandlungsanlage zu führen, sodass auch für einzelne Behälter besondere Bedingungen realisiert werden können. Beispielsweise kann vorgesehen sein, dass die Aufsteckeinheit 21 zunächst einen Behälter auf einen der Träger aufbringt. Danach können die Preforms beispielsweise in Reihe durch den Ofen 1 geführt werden. Hier kann auch vorgesehen sein, dass die Klammern oder Haltevorrichtungen, die die Preforms halten, über Motoren verfügen, sodass die Preforms rotiert werden können. Besonders vorteilhaft ist, dass aufgrund der separaten Ansteuerbarkeit der Träger die Wege und Geschwindigkeiten einzelner Träger eingestellt werden können. So kann die Zeit, die ein Preform zwischen dem Ende des Heizens und dem Beginn des Blasens verweilt, stets konstant gehalten werden, selbst wenn die Blasstationen räumlich fixiert sind. In diesem Sinne ist es auch von Vorteil, dass die Bewegung der einzelnen Träger separat gesteuert werden kann. Das erlaubt eine individuelle Gestaltung der Bewegung der Träger mit den Preforms durch den Ofen 1. So kann, beispielsweise in Abhängigkeit der Größe der Behälter/Preforms, der Abstand zwischen einzelnen Trägern im Ofen variiert werden. So wird durch Regulierung des Abstands der Preforms zueinander ein möglichst gutes Erwärmprofil erzielt. Weiterhin kann die durch den Ofen 1 führende Strecke mehrere, durch Weichen miteinander verbundene Teilstrecken umfassen. Durch Umleiten einzelner Träger können hier bestimmte oder alle Behälter auf diese Teilstrecken geführt werden. Hier können die Erwärmprofile der Preforms qualitativ beeinflusst werden. So kann in einer ersten Teilstrecke ein erstes Erwärmprofil (Temperaturgradient) auf die durch diese Teilstrecke geführten Behälter geprägt werden, während auf andere Behälter, die durch eine andere Teilstrecke geführt werden, ein anderes Erwärmprofil aufgeprägt wird. Außerdem kann durch das Durchlaufen einzelner Teilstrecken eine, im Vergleich mit dem Normalfall, erhöhte oder reduzierte Erwärmzeit realisiert werden, indem beispielsweise die Transportgeschwindigkeit der Träger auf den einzelnen Teilstrecken variiert wird. Schließlich kann auch eine zusätzliche Ausleitstrecke vorgesehen sein, über die die Träger mit den von ihnen transportierten Behältern aus dem Ofen geleitet werden können, wenn es beispielsweise zu einer Betriebsstörung kommt.

Um zusätzlich die Umrüstzeiten beim Umrüsten der gesamten Behälterbehandlungsanlage und insbesondere dem Ofen 1 zu reduzieren, kann ein Abstellgleis oder eine Warteschleife vorgesehen sein, in der bestimmte Träger mit speziellen Halterungen für Behälter zwischengelagert werden. So können für die Behältersorte A (Preformsorte A) nur Träger der Bauart a eingesetzt werden, während für Behältersorte B Träger der Bauart b im der Warteschleife vorgehalten werden. Bei einem Umbau der Anlage auf die Behältersorte B können die Träger der Bauart a dann durch Träger der Bauart b ersetzt werden, wobei die Träger b beispielsweise in den Ofen eingefahren werden und die Träger a auf das Abstellgleis geführt werden. Dieser Austausch von Träger kann vorzugsweise automatisch erfolgen, indem beispielsweise über eine Nutzerschnittstelle dem Transportsystem ein Befehl erteilt wird, alle Träger einer bestimmten Bauart durch Träger einer anderen Bauart zu ersetzen. Dazu kann jeder Träger über eine Kennung oder Identifikationseinrichtung verfügen, über die das Transportsystem den Träger identifizieren kann.

In einer besonders bevorzugten Ausführungsform umfasst jeder Träger anstelle einer (passiven) Kennung oder einer Identifikationseinrichtung oder zusätzlich dazu eine eigene Recheneinheit. Aufgrund der Abmessungen eines Trägers handelt es sich hier nicht um einen vollständigen Computer. Vielmehr ist vorgesehen, dass jeder Träger eine Prozessoreinheit und einen ihr zugeordneten Speicher umfasst, sodass kleinere Routinen über diese Prozessoreinheit ausgeführt werden können. Die Prozessoreinheit kann dazu beispielsweise über eine drahtlose Verbindung auch mit der Steuereinheit, die die Behälterbehandlungsanlage steuert, verbunden sein, um Befehle auszutauschen und beispielsweise ein Identifikationssignal zu senden. Der Träger wird so deutlich autonomer ausgeführt, was es erlaubt, kleinere Prozessschritte, wie beispielsweise ein Drehen oder Schwenken eines Preforms bzw. Flasche mittels der Prozessoreinheit zu steuern und durchzuführen. In diesem Zusammenhang kann es auch vorteilhaft sein, wenn der Träger zwecks Datenaustausch mit der Steuereinheit einen entsprechenden drahtlos arbeitenden Transponder umfasst, der Daten drahtlos übermitteln und empfangen kann. Da der Träger so prinzipiell zur drahtlosen Datenübertragung geeignet ist, kann auch vorgesehen sein, dass ein Datenaustausch zwischen einzelnen Trägern stattfindet, die sich so gegenseitig beispielsweise ihre aktuelle Position mitteilen.

Außerdem können so auch produktabhängige Wege und Aktionen des Trägers durch die Prozessoreinheit gesteuert werden. Beispielsweise kann vorgesehen sein, dass ein erster, von einem ersten Träger transportierter Preform für eine Zeit t1 im Ofen 1 verweilen soll, während ein zweiter, von einem zweiten Träger transportierter Preform für eine Zeit t2 im Ofen verweilt. Ist der Träger mit der Prozessoreinheit mit Identifikationseinrichtungen für Behälter bzw. Preforms ausgerüstet (beispielsweise Sensoren, die unter anderem die Größe oder die Masse des Preforms auf technisch einfache Weise ermitteln können, wie eine Wiegezelle oder ein Federkraftmesser), so kann der Träger entweder autonom oder durch einen gewissen Datenaustausch mit der Steuereinheit den Preform erkennen und der erste Träger kann durch die ihm zugeordnete Prozessoreinheit so gesteuert werden, dass er selbstständig eine Route durch den Ofen 1 wählt, sodass der Preform für die Zeit t1 im Ofen 1 verweilt, wohingegen der zweite Träger durch die ihm zugeordnete Prozessoreinheit veranlasst wird, die Zeit t2 im Ofen 1 zu verweilen.

Es ist besonders bevorzugt, wenn für solche produktabhängigen Prozessschritte die Leistungsfähigkeit der Prozessoreinheit allein ausreichend ist und kein Datenaustausch mit der Steuereinheit erforderlich ist. Der Träger kann dann autonom produktabhängige Prozessschritte durchführen.

Die Prozessoreinheit mit dem ihr zugeordneten Speicher kann auch genutzt werden, um aktuelle Prozessdaten über den von dem entsprechenden Träger transportierten Behälter und/oder Preform zu sammeln. So kann die Prozessoreinheit (in Echtzeit) Daten über die Heiztemperatur im Ofen 1, der der Preform ausgesetzt war, sammeln und diese Daten können beispielsweise automatisch beim Verpacken oder bei der Endkontrolle eines Behälters aus dem Speicher ausgelesen und verarbeitet werden. Es gibt hier noch andere Anwendungsmöglichkeiten. Beispielsweise kann die Prozessoreinheit erfassen, in welcher Blasform der Behälter hergestellt wurde, in welchem Füller der Behälter befüllt wurde, in welchem Etikettieraggregat und mit welcher Etikettenrolle er etikettiert wurde oder mit welchem Druckmodul er bedruckt wurde. Auch die gesamte Herstellungsdauer kann so ermittelt werden. Es sind hier diverse Ausführungen denkbar. Prinzipiell können alle prozessrelevanten Daten auf diese Weise für jeden Behälter individuell ermittelt werden. Praktikabel und bevorzugt sind jedoch Ausführungsformen, bei denen nur die wichtigsten Kenngrößen einzelner Herstellungs- oder Verarbeitungsprozesse erfasst werden. Wird der Behälter oder Preform durch mehr als einen Träger während der Fertigstellung transportiert, wie beispielhaft oben beschrieben wurde, kann beispielsweise bei der Übergabe von einem Träger zum anderen auch die Information, die behälterspezifisch im ersten Träger gespeichert wurde an den zweiten Träger übermittelt werden, vorzugsweise mit einer Information über den ersten Träger, sodass hier eine durchgehende Verfolgung des gesamten Herstellungsprozesses gegeben ist. Dies erlaubt weiterhin eine permanente Fehlerkontrolle und Qualitätskontrolle auf automatischem Wege. Wird beispielsweise bei einer Auswertung der Daten festgestellt, dass ein Behälter zu lang im Ofen war oder nicht hinreichend lang befüllt wurde, oder falsch etikettiert oder bedruckt wurde, kann er automatisch aussortiert werden.

Ist in der Behälterbehandlungsanlage eine Etikettiervorrichtung oder ein oder mehrere Etikettiermodule vorgesehen, so können die Träger aus der eigentlichen Transportstrecke an die Etikettiervorrichtung übergeben werden, sodass die von ihnen transportierten Behälter etikettiert werden können. Anschließend können die Träger wieder auf die Transportstrecke (Magnetbahn) geleitet werden. Dabei kann die Übergabe über separate Übernahmeeinrichtungen realisiert werden, die die Träger zusammen mit den Behältern aus der Transportstrecke übernehmen können. Es kann aber auch vorgesehen sein, dass die Träger über ein System von Weichen auf eine andere Magnetbahn geführt werden, die durch die Etikettiervorrichtung führt.

Die Verwendung von Weichen kann auch bei Füllern vorteilhaft werden. Umfasst der Füller zum Befüllen von Behältern mehrere Füllstationen, so können über ein geeignetes System von Weichen die Behälter mittels der Träger an die Füllstationen herangeführt werden. So können beispielsweise, wenn insgesamt 16 Füllstationen vorgesehen sind, 3, 4 oder 5 oder mehr Behälter parallel befüllt werden, was zu einer erheblichen Zeitersparnis führt. Weiterhin kann mittels des Weichensystems eine Befüllung von Behältern realisiert werden, die aus unterschiedlichen vorhergehenden Behandlungseinrichtungen kommen. So können beispielsweise Flaschen, die zuvor bedruckt oder etikettiert wurden, über die Weichen demselben Füller zugeführt und (parallel) befüllt werden. Auf diese Weise kann eine sehr flexible Behandlungsanlage bereitgestellt werden, da Behandlungsschritte für eine erste Anzahl von Behältern von den Behandlungsschritten einer zweiten Anzahl von Behältern teilweise verschieden sein können, Überschneidungen aber in einzelnen Behandlungsschritten, wie dem Befüllen oder Verschließen auftreten können, ohne dass hierfür separate Behandlungsvorrichtungen bereitgestellt werden müssen, wie beispielsweise zwei separate Füller oder Verschließer.

So können die Behälter, die von den Trägern transportiert werden aber auch in mehrere Gassen bzw. in separate Transportlinien aufgeteilt werden, bevor sie beispielsweise an ein Unterflurband übergeben werden, sodass ungeordnetes Positionieren der Behälter oder Umkippen einzelner Behältern vermieden wird.

Hier kann auch ein erneutes Zusammenführen von einzelnen Transportlinien auf eine Linie vorteilhaft sein. Ist beispielsweise ein Inspektor oder ein Stickstoff Droppler vorgesehen, können Behälter, die auf unterschiedlichen Transportlinien transportiert werden, zunächst auf eine gemeinsame Transportlinie umgeleitet werden und dann durch den Inspektor oder Stickstoff Droppler geführt werden.

Zusätzlich kann vorgesehen sein, dass jeder Träger über mehrere Halterungen für Behälter verfügt. So können mehrere Behälter gleichzeitig von einem Träger transportiert werden. Vorteilhaft kann auch sein, bestimmte Träger nur für einen bestimmten Bereich der Behälterbehandlungsanlage vorzusehen. So können Träger mit mehreren Halterungen beispielsweise für Transporte von Behältern über längere Strecken genutzt werden, während Träger mit nur einer Halterung verwendet werden, um Preforms durch den Ofen 1 zu transportieren.

Ist eine Inspektionsvorrichtung 24 vorgesehen, so können die Träger, je nach dem Ergebnis der Inspektion nach Verlassen der Inspektionsvorrichtung 24 entweder über eine entsprechende Weiche wieder zurück in die eigentlichen Transportlinien geleitet werden, oder auf eine separate Linie zu Wartungszwecken geleitet werden. Da die Laufzeit, seit der ein bestimmter Träger in Betrieb ist, beispielsweise über die Steuereinheit erfasst werden kann, kann auch vorgesehen sein, dass ein Träger unabhängig vom Ergebnis der Inspektionsvorrichtung 24 nach einer vorgegebenen Zeit in die Linie für die Wartung geschickt wird.

### Bezugszeichenliste

- 1: Ofen
- 2: Blasformvorrichtung/Blasmaschine
- 3: Preform/Behälterrohling
- 4: Transporteinrichtung
- 5: Träger
- 6: Transportbahn
- 7: Rundführabschnitt/Ofenbahn
- 8: Einleitstrecke
- 9: Ausweichstrecke
- 10: Abstellstrecke
- 11: Wagenabschnitt
- 12: Spindel
- 13: Zahnrad/Reibrad
- 14: Längsachse
- 15: Außenverzahnung
- 16: Kontaktbereich
- 17: Greifabschnitt
- 18: Heizvorrichtung
- 19: Abdeckring
- 20: Mundstück
- 21: Aufsteckeinheit
- 22: Etikettiermaschine
- 23: Füller
- 24: Inspektionsvorrichtung
- 25: Gassenaufteiler
- 26: Tester
- 27: Ausleitung
- 28: Puffer

## Patentansprüche

1. Behälterbehandlungsanlage mit einem Ofen (1) und einer dem Ofen (1) nachgeschalteten Blasformvorrichtung (2) zum Bearbeiten einer Vielzahl von Behältern (3), wie insbesondere Preforms, mit einer Transporteinrichtung (4), die zum Fördern mehrerer Träger (5) ausgebildet ist, wobei jeder Träger (5) zur Aufnahme zumindest eines Behälters (3) vorgesehen ist, wobei die Transporteinrichtung (4) und der Träger (5) so aufeinander abgestimmt sind, dass jeder Träger (5) mittels dieser Transporteinrichtung (4) individuell durch die Behälterbehandlungsanlage (1) fahrbar ist, wobei jeder Träger unabhängig und/oder entkoppelt von den anderen Trägern durch den Ofen treibbar ist, wobei der Ofen eine flexible Teilung aufweist und eine Steuereinheit vorgesehen ist, die ausgebildet ist, ein Verfahrprofil jedes Trägers zu beeinflussen,
**dadurch gekennzeichnet, dass** die Steuereinheit die Relativabstände der einzelnen Preforms zueinander in jeder Position des Ofens steuern kann, wobei die Steuereinheit ausgebildet ist, die Relativabstände so zu steuern, dass kleine Preforms mit engerem Abstand zueinander und große Preforms mit größerem Abstand zueinander durch den Ofen verfahren werden.

2. Behälterbehandlungsmaschine nach Anspruch 1, **dadurch gekennzeichnet, dass** die Transporteinrichtung (4) und der Träger (5) so aufeinander abgestimmt sind, dass jeder Träger (5) einen Preform mittels dieser Transporteinrichtung individuell durch den Ofen fahren kann.

3. Behälterbehandlungsanlage nach Anspruch 1 oder 2, **dadurch gekennzeichnet, dass** dieselbe Transporteinrichtung (4) durch die Blasformvorrichtung (2) verläuft, die durch den Ofen (1) komplett hindurch verläuft, so dass derselbe Träger (5) mit eingesetzt bleibendem Behälterrohling (3) durch sowohl den Ofen (1) als auch die Blasformvorrichtung (2) verfahrbar ist.

4. Behälterbehandlungsanlage nach einem der Ansprüche 1 bis 3, **dadurch gekennzeichnet, dass** mindestens einer der Träger (5) einen zum Antrieb genutzten Servomotor aufweist.

5. Behälterbehandlungsanlage nach einem der Ansprüche 1 bis 4, **dadurch gekennzeichnet, dass** mindestens einer der Träger (5) zum magnetkraftabhängigen Bewegen ausgelegt ist, vorzugsweise in Wechselwirkung mit einer Transportbahn (6) der Transporteinrichtung (4), auf der der Träger (5) gleitfähig aufliegt.

## Claims

1. Container treatment plant comprising an oven (1) and a blow molder (2) located downstream of the oven (1) and used for processing a plurality of containers (3), such as in particular preforms, and further comprising a conveying unit (4) configured for conveying a plurality of carriers (5), each carrier (5) being provided for accommodating at least one container (3), wherein the conveying unit (4) and the carrier (5) are adapted to one another such that each carrier (5) is individually movable through the container treatment plant (1) by means of said conveying unit (4), wherein each carrier can be driven through the oven independently and/or decoupled from the other carriers, wherein the oven has a flexible pitch and a control unit is provided that is adapted to influence the motion profile of each individual carrier, **characterized in that** the control unit can control the distances which the preforms have relative to one another at each position of the oven, wherein the control unit is adapted to control the distances which the preforms have relative to one another such that small preforms move at smaller distances from one another and large preforms move at larger distances from one another through the oven.

2. The container treatment plant according to claim 1, **characterized in that** the conveying unit (4) and the carrier (5) are adapted to one another such that each carrier (5) can be used for individually moving a preform through the oven by means of said conveying unit.

3. The container treatment plant according to claim 1 or 2, **characterized in that** the same conveying unit (4) which fully extends through the oven (1) also extends through the blow molder (2), so that the same carrier (5) can be moved through the oven (1) as well as through the blow molder (2), with the container blank (3) remaining inserted therein.

4. The container treatment plant according to one of the claims 1 to 3, **characterized in that** at least one of the carriers (5) includes a servomotor used for the purpose of driving.

5. The container treatment plant according to one of the claims 1 to 4, **characterized in that** at least one of the carriers (5) is configured for movement in a magnetic force dependent manner, preferably in interaction with a conveying path (6) of the conveying unit (4), on which the carrier (5) slidingly rests.

## Revendications

1. Installation de traitement de récipients avec un four (1) et un dispositif de formage par soufflage (2) monté en aval du four (1) pour le traitement de plusieurs récipients (3), comme en particulier des préformes, avec un dispositif de transport (4) qui est conçu pour le transport de plusieurs supports (5), chaque support (5) étant prévu pour recevoir au moins un récipient (3), **caractérisée en ce que**
le dispositif de transport (4) et le support (5) sont adaptés l'un à l'autre de telle sorte que chaque support (5) peut être entraîné individuellement à travers l'installation de traitement de récipients (1) au moyen de ce dispositif de transport (4), dans lequel chaque support peut être entraîné à travers le four indépendamment et/ou découplé des autres supports, dans lequel le four présente une division flexible et une unité de commande est prévue qui est conçue pour influencer un profil de déplacement de chaque support,
**caractérisé en ce que** l'unité de commande est capable de commander les distances relatives des préformes individuelles les unes par rapport aux autres dans toute position du four, l'unité de commande étant adaptée pour commander les distances relatives de telle manière que les petites préformes sont déplacées à travers le four à une distance plus petite les unes des autres et les grandes préformes sont déplacées à travers le four à une distance plus grande les unes des autres.

2. Machine de traitement de récipients selon la revendication 1, **caractérisée en ce que** le dispositif de transport (4) et le support (5) sont adaptés l'un à l'autre de telle manière que chaque support (5) peut déplacer une préforme individuellement à travers le four au moyen de ce dispositif de transport.

3. Installation de traitement de récipients selon les revendications 1 ou 2, **caractérisée en ce que** le même dispositif de transport (4) traverse le dispositif de formage par soufflage (2), qui traverse complètement le four (1), de sorte que le même support (5) avec une ébauche de récipient (3) restant insérée peut être déplacé à la fois dans le four (1) et dans le dispositif de formage par soufflage (2).

4. Installation de traitement de récipients selon l'une des revendications 1 à 3, **caractérisée en ce qu'**au moins l'un des supports (5) présente un servomoteur utilisé pour l'entraînement.

5. Installation de traitement de récipients selon l'une quelconque des revendications 1 à 4, **caractérisée en ce qu'**au moins l'un des supports (5) est conçu pour un mouvement dépendant de la force magnétique, de préférence en interaction avec une piste de transport (6) du dispositif de transport (4), sur laquelle le support (5) repose de manière coulissante.
